# EUROPEAN PATENT APPLICATION

(11) **EP 1 998 244 A1**
(43) Date of publication of application: **03.12.2008**
(21) Application number: 06810456.1
(22) Date of filing: 22.09.2006
(51) Int. Cl.: G06F 3/048

(54) **USER INTERFACE PROCESSOR AND USER INTERFACE PROCESSING METHOD**

(30) Priority: 06.03.2006 JP 2006059342
(71) Applicant: D&M Holdings, Inc., Kanagawa 210-8569 (JP)
(72) Inventor: FUKUSIMA, Hiroshi, Kawasaki-shi, Kanagawa 228-8505 (JP); TAKASU, Yasuo, Kawasaki-shi, Kanagawa 228-8505 (JP)
(74) Representative: Hackney, Nigel John
(86) International application number: PCT/JP2006/318843
(87) International publication number: WO 2007/102237

(57) **Abstract**

There is provided a user interface processor (200) for generating a display screen on which a selectable item having a multi-level hierarchical structure is displayed to the user. The user interface processor is equipped with image information generators (202, 203, 204, 205) for generating two-dimensional image information including at least two lateral faces of a cube having lateral faces to each of which the selectable item having a different hierarchical level is assigned.

## Description

### Technical Field

The present invention relates to a user interface technique in which selectable items are presented to a user.

### Background Art

As a technique of displaying selectable items on a display screen of an electronic appliance such as an Audio Visual (AV) appliance in order to receive input of a configuration of the appliance, a selection of functions of the appliance or the like from a user, there is a technique that displays and arranges selectable items on a two-dimensional plane in order to receive a selection (See Japanese Un-examined Patent Laid-Open No. 7-168688, for example).

According to the displaying technique disclosed in 7-168688, when there are many selectable items having hierarchical structure, a wide area is required for displaying the selectable items on a display screen in order to grasp them at a glance and it is difficult to make efficient use of the display screen. If only a small part of the selectable items are displayed, it is difficult for a user to grasp the relation with the other selectable items, and further, the user is forced to carry out search operations in many layers.

As a technique of displaying selectable items having hierarchical structure with fixed area for displaying the selectable items, there is a technique that displays a three-dimensional figure on a two-dimensional plane and displays selectable items on each face (See Japanese Un-examined Patent Application Laid-Open No. 7-114451, for example).

### Disclosure of the Invention

According to the technique disclosed in 7-114451, for each item in a given layer, a face displays items contained in the layer directly under the given layer. This technique can efficiently display more selectable items in a given display area in comparison with a technique of displaying selectable items two-dimensionally as in the technique disclosed in 7-168688. Further, since items in two layers can be displayed in virtual-three-dimensional space, it is possible to make a display in which relation between items in different layers can be easily grasped.

However, in the above technique, items displayed in each face are fixed items that have been determined previously. Depending on the number of layers and the number of selectable items, it is impossible to display all the items. An object of the present invention is to solve this problem.

To solve the above problem, a first mode of the present invention provides a user interface processor for generating a display screen that provides selectable items having a multi-layer hierarchical structure (multi-level hierarchical structure) to a user, comprising: an image information generation part (generator), which generates two-dimensional image information including at least two side (lateral) faces of a cube that has side faces to which, out of the selectable items, selectable items of respective different layers are assigned.

In the above user interface processor, structurally-continuous layers of selectable items may be assigned to respective adjacent side faces of the cube.

In the above user interface processor, when the user selects a selectable item assigned to one side face, selectable items belonging to a layer just under a layer to which the selected selectable item belongs may be assigned to an adjacent side face.

In the above user interface processor, the side faces of the cube may display a given number of selectable items in a same layer; and when a number of selectable items to display in the side faces exceeds the given number, the selectable items in question may be assigned to a top face and/or a bottom face of the cube in addition to the side faces of the cube.

In the above user interface processor, the two-dimensional image may include, in addition to the at least two side faces of the cube, other faces projected onto virtual walls.

Further, a second mode of the present invention provides a user interface processor for generating a display screen that provides selectable items having a multi-layer hierarchical structure to a user, comprising:
a storage unit that holds: information indicating elements constituting the selectable items and a hierarchical structure between the elements; and three-dimensional figure data on a three-dimensional figure to display on the display screen; and
a drawing data generation part that generates drawing data in which the elements are arranged on the three-dimensional figure, according to an instruction received from a user.

Here, in the above user interface processor, the three-dimensional figure may be a cube. The drawing data generation part may display the cube on a two-dimensional display screen by perspective drawing, such that the top face and another face are used to display elements of a given layer, the top face and "another face" are displayed emphatically, still-another face is used to display elements in one layer under or above the elements displayed in the top face and "another face", and one element in the emphatically-displayed faces is displayed further emphatically. In that case, the user interface processor may further comprise a user instruction receiving means that receives from a user an instruction to shift the emphatically-displayed element, and the drawing data generation part may change the emphatically-displayed element in the drawing data according to an instruction received through the user instruction receiving means. Further, in that case, the drawing data generation part may generate drawing data in which: when the instruction from the user means shift between elements in the same layer, the emphatically-displayed element is changed; and when the instruction from the user means upward or downward shift of layer, the emphatically-displayed face is changed between the right face and the left face of the cube displayed by perspective drawing, and elements in the same layer as that of the elements displayed in the emphatically-displayed face are displayed in the top face.

To attain the above object, a third mode of the present invention provides a user interface processing method for generating a display screen that provides selectable items having a multi-layer hierarchical structure to a user, wherein: the method generates two-dimensional image information including at least two side faces of a cube that has side faces to which, out of the selectable items, selectable items of respective different layers are assigned.

In the above method, structurally-continuous layers of selectable items may be assigned to respective adjacent side faces of the cube.

In the above method, when the user selects a selectable item assigned to one side face, selectable items belonging to a layer just under a layer to which the selected selectable item belongs may be assigned to an adjacent side face.

In the above method, the side faces of the cube may display a given number of selectable items in a same layer; and when a number of selectable items to display in the side faces exceeds the given number, the selectable items in question may be assigned to a top face and/or a bottom face of the cube in addition to the side faces of the cube.

In the above method, the two-dimensional image may include, in addition to the at least two side faces of the cube, other faces projected onto virtual walls.

Further, a fourth mode of the present invention provides a user interface processing method for generating a display screen that provides selectable items having a multi-layer hierarchical structure to a user, comprising: a selectable item display step, in which a figure obtained by projecting a three-dimensional figure two-dimensionally is displayed on the display screen, and prescribed elements as components of the selectable items are displayed on the figure according to a previously-determined rule; an emphatic display step, in which a prescribed place of the displayed selectable items is displayed emphatically; and an emphatically-displayed place shifting step, in which, according to an instruction from the user, the emphatically-displayed place is shifted and the prescribed elements (as components of the selectable items) displayed on the figure are changed.

### Brief Description of Drawings

Fig. 1 is a schematic view showing a system of an AV appliance that includes a user interface processor;
Fig. 2 is a functional block diagram showing the system;
Fig. 3 is a view showing an example of operation buttons provided in a control unit;
Fig. 4 is a diagram showing an example of selectable items;
Fig. 5 is a view for explaining a cube in a virtual space displayed on a display screen;
Fig. 6 is a development in a two-dimensional plane, showing a cube to be drawn such that faces displaying the same layer are arranged vertically;
Fig. 7 is a view showing an example of a cube displayed on a display screen;
Fig. 8 is a view showing an example of a cube displayed on a display screen;
Fig. 9 is a view showing an example of a cube displayed on a display screen;
Fig. 10 is a view showing an example of a cube displayed on a display screen;
Fig. 11 is a view showing an example of a cube displayed on a display screen;
Fig. 12 is a view showing an example of a cube displayed on a display screen;
Fig. 13 is a diagram showing elements displayed on a display screen in the case where an element is highlighted in a face;
Fig. 14 is a diagram showing elements displayed on a display screen in the case where an element is highlighted in a face;
Fig. 15 is a diagram showing elements displayed on a display screen in the case where an element is highlighted in a face; and
Fig. 16 is a diagram showing elements displayed on a display screen in the case where an element is highlighted in a face.

### Best Mode for Carrying Out the Invention

In the following, an embodiment of the present invention will be described referring to the drawings. The present embodiment will be described taking an example where selectable items are displayed on a display screen by using faces of a figure that is a projection of a cube onto a two-dimensional plane. Further, the present embodiment will be described taking an example where the present invention is applied to an AV appliance.

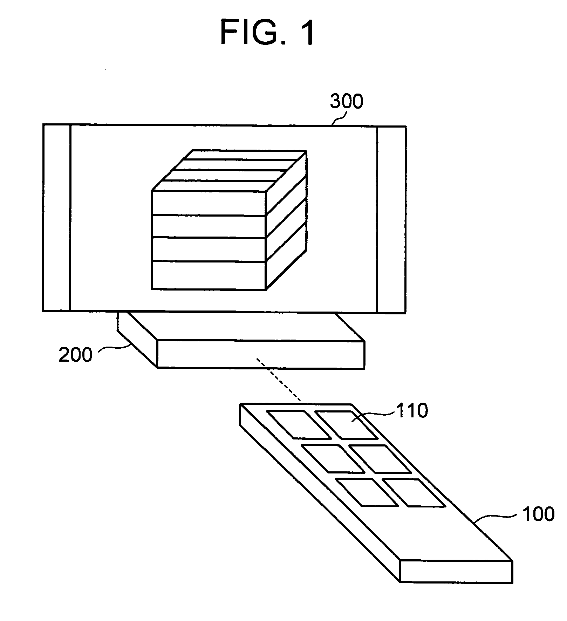

Fig. 1 is a view showing an outline of a system of an AV appliance that includes a user interface processor according to the present embodiment. The user interface processor of the present embodiment makes selectable items displayed in order to receive a selection from a user.

The system of the present embodiment comprises: a control unit 100 that receives an instruction or a selection of an item from a user and transmits the received instruction or selection as a command; a user interface processor 200 that follows the command transmitted from the control unit 100, to generate screen data for displaying a selected state of the item specified by the command; and a display unit 300 that displays the screen data generated by the user interface processor 200. The control unit 100 comprises operation buttons (keys) 110 for receiving an instruction from the user.

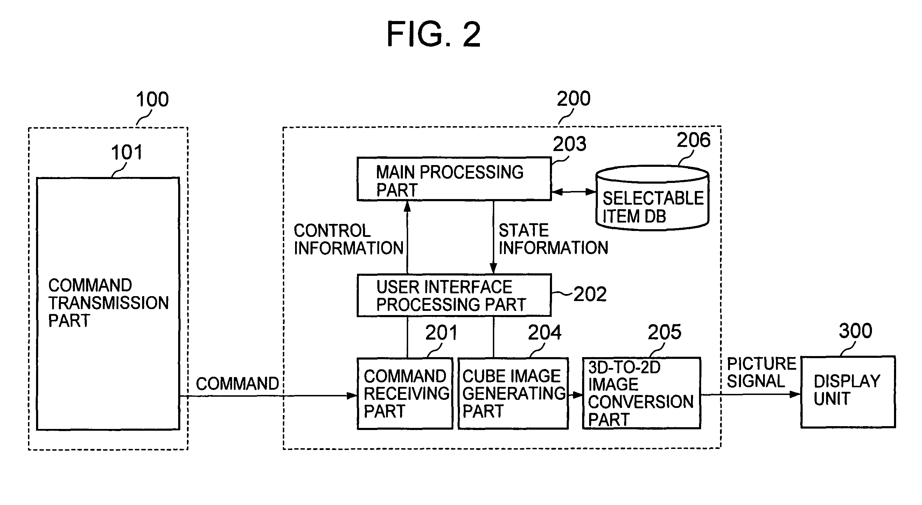

Fig. 2 is a functional block diagram showing the system of the present embodiment. The control unit 100 comprises a command transmission part 101 for generating a command based on an instruction received from the user and transmitting the command to the user interface processor 200 through a transmission means. The transmission means may be a cable line or a radio line. An instruction from the user is received through the operation buttons 110.

The user interface processor 200 comprises a command receiving part 201, a user interface processing part 202, a main processing part 203, a cube image generating part 204, a 3D-to-2D image conversion part 205, and a selectable item database (DB) 206.

The selectable item DB 206 stores information on selectable items having hierarchical structure, information on the number of elements that can be displayed on each face of the below-described cube, and the like. Details and data structure of stored selectable items will be described later.

The command receiving part 201 is an interface that receives a command transmitted from the control unit 100 and delivers the received command to the user interface processing part 202.

The user interface processing part 202 is an interface between the command receiving part 201 and the main processing part 203 and the main processing part 203 and the cube image generating part 204. The user interface processing part 203 converts a command received by the command receiving part 201 into control information that can be processed by the main processing part 203, and delivers the control information to the main processing part 203. Further, the user interface processing part 203 converts information (state information) that indicates a state after processing by the main processing part 203 into display element information for screen display, and delivers the display element information to the cube image generating part 204.

In delivering a command to the main processing part 203, the user interface processing part 202 judges whether the command is valid or invalid based on the current state information. Only when the command is judged to be valid, the user interface processing part 202 converts the command and inputs the converted command to the main processing part 203. Further, the display element information includes information required for generating a cube image such as information on elements to be displayed on each face of the cube, information on a direction in which the cube is turned, and the like.

The main processing part 203 generates state information indicating a new state, by using the current state information, the control information received from the user interface processing part 202, information on the selectable items in the selectable item DB 206, and information on the number of elements that can be displayed on each face of the below-described cube. Here, as the state information, the main processing part 203 generates data including the element to be displayed in each face of the cube, a position of each element, an arrangement, the below-described highlighted or focus parts, and the like.

The cube image generating part 204 generates drawing data and, in addition, performs animate processing such as processing of switching a display as if a highlighted or focus part has been shifted or the cube has turned, in response to a command from the control unit 100. In detail, the cube image generating part 204 arranges the display element information received from the user interface processing part 202 on the plain faces of the cube to be displayed on a display screen, to generate screen construction information as drawing data to be drawn in a virtual three-dimensional space. Then, the cube image generating part 204 sends the generated screen construction information to the 3D-to-2D image conversion part 205.

The 3D-to-2D image conversion part 205 converts the screen construction information into drawing data (a picture signal) for displaying on the display screen of the display unit 300, and sends the drawing data to the display unit 300.

The display unit 300 displays the drawing data (the picture signal) received from the user interface processor 200. The display unit 300 may be coupled with the user interface processor 200 by cable or radio, or placed in one case.

The user interface processor 200 of the present embodiment is implemented by an information processor comprising a CPU, a memory, and a storage such as a hard disk or a semiconductor memory. Each function of the user interface processor 200 is realized when a program stored in the storage such as the semiconductor memory is loaded into the memory and executed by the CPU. Further, the selectable item DB 206 and various types of data required for processing are stored in the storage.

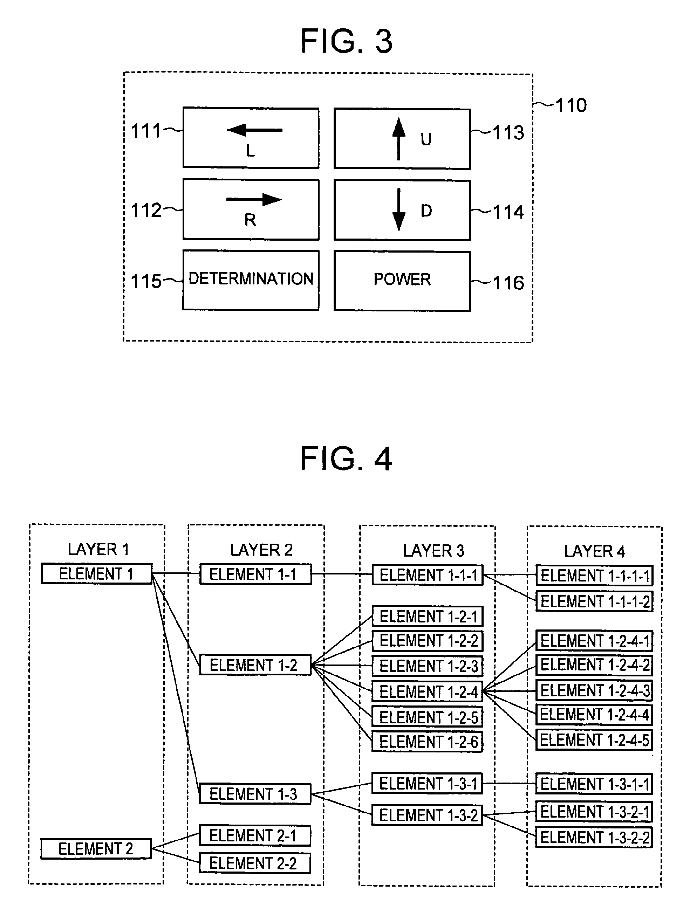

Next, the operation buttons (keys) 110 provided in the control unit 100 for receiving an instruction from the user will be described. Fig. 3 is a view showing an example of the operation buttons 110 provided in the control unit 100 of the present embodiment.

As shown in the figure, the operation buttons 110 include: an L button 111, an R button 112, a U button 113 and a D button 114 for receiving an instruction to shift an emphatically-displayed part on a cube drawn on the display screen of the display unit 300; a determination button 115 for receiving an instruction to determine a selected element; and a power button 116 for receiving an instruction to turn on or off the system. The L and R buttons 111, 112 are buttons for receiving an instruction to shift an emphatically-display part respectively to the left and right face by face on the screen. And, the U and D buttons 113, 114 are buttons for receiving an instruction to shift an emphatically-display part respectively upward and downward element by element in the emphatically-displayed face.

Here, emphatic display means that a specific selectable item (element) or face is enclosed by a closing line, displayed by a different color from colors of the other places, or displayed being highlighted. In the following, for the sake of convenience, emphatic display of each face is referred to as focus, and emphatic display of each element as highlight.

When a depression of the determination button 115 is received, it is judged that an element highlighted at that time is selected, and subsequent processing is performed.

Next, the selectable items (elements) stored in the selectable item DB 206 will be described. The selectable items (elements) in the present embodiment have hierarchical structure. Fig. 4 shows an example of the selectable items (elements).

As shown in the figure, the selectable items (elements) have hierarchical structure of four layers. The layer 1 has an element 1 and an element 2. The layer 2 has: elements 1-1, 1-2 and 1-3 under the element 1; and elements 2-1 and 2-2 under the element 2. The layer 3 has: an element 1-1-1 under the element 1-1; elements 1-2-1, 1-2-2, 1-2-3, 1-2-4, 1-2-5 and 1-2-6 under the element 1-2; and elements 1-3-1 and 1-3-2 under the element 1-3. The layer 4 has: elements 1-1-1-1 and 1-1-1-2 under the element 1-1-1; elements 1-2-4-1, 1-2-4-2, 1-2-4-3, 1-2-4-4 and 1-2-4-5 under the element 1-2-4; an element 1-3-1-1- under the element 1-3-1; and elements 1-3-2-1 and 1-3-2-2 under the element 1-3-2. Information on each of these elements and hierarchy information are stored in the storage. In the following, a group of elements that are in the layer just under some element and related to that element is referred to as a child group, and the element to which the child group is related is referred to as a parent. For example, the elements 1-3-1 and 1-3-2 make up a child group of the element 1-3. And, the element 1-3 is a parent of the elements 1-3-1 and 1-3-2.

In the example of the present embodiment, hierarchy relating to the element 2 has two layers. Thus, elements may have different depth of layers. Further, the hierarchical structure of the selectable items (elements) in the present embodiment is described and held as a tree structure such as a linked list, a Balanced Tree (B-Tree), or the like.

The information on the selectable items (elements) is stored in the storage such as a hard disk as described above, and then read and used when the main processing part 203 of the user interface processor 200 generates drawing data.

Next, processing performed by the user interface processor 200 of the present embodiment for generating drawing data when it receives a command from the control unit 100 will be described.

First, will be described a cube (a regular hexahedron) 400 in a virtual space, which is displayed on a display screen by the display unit 300 when the display unit 300 receives image information from the user interface processor 200.

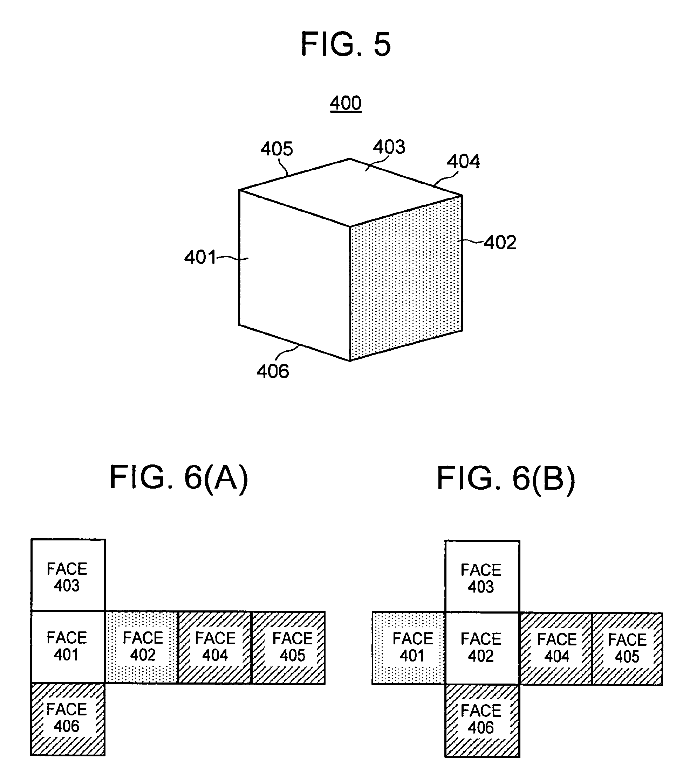

Fig. 5 is a view for explaining a cube in a virtual space, which is displayed on a display screen. The cube 400 has six faces, i.e. faces 401, 402, 403, 404, 405 and 406. The display screen displays three faces (a right face, a left face and a top face in the figure) of the cube 400 by perspective drawing. In the drawn cube 400, faces visible to the user are three, the face 401 (the left face), the face 402 (the right face) and the face 403 (the top face). In these three faces, selectable items (elements) having hierarchical structure are arranged. It is favorable that the right face and the left face are displayed to be equal in area.

When the face 401 is in focus, the faces 403 and 406 display elements of the same layer as the layer of the elements displayed in the face 401. On the other hand, when the face 402 is in focus, the faces 403 and 406 display elements of the same layer as the layer of elements displayed in the face 402. The face 402 displays items (elements) that are in the layer directly under the given items (elements) displayed in the face 401. The face 403 is in focus both when the face 401 is in focus and when the face 402 is in focus. In the following, when a face other than the face 403 is in focus, it is referred to as a focus face.

Fig. 6 is a development in a two-dimensional plane, showing the cube 400 to be drawn such that faces showing the same layer are arranged vertically. Fig. 6(A) is a development in the case where the faces 401 and 403 are in focus, while Fig. 6(B) is a development in the case where the faces 402 and 403 are in focus.

Next, image information will be described. Image information is generated by the user interface processor 200 when the user interface processor 200 receives an instruction to shift focus and highlight from the user through the control unit 100.

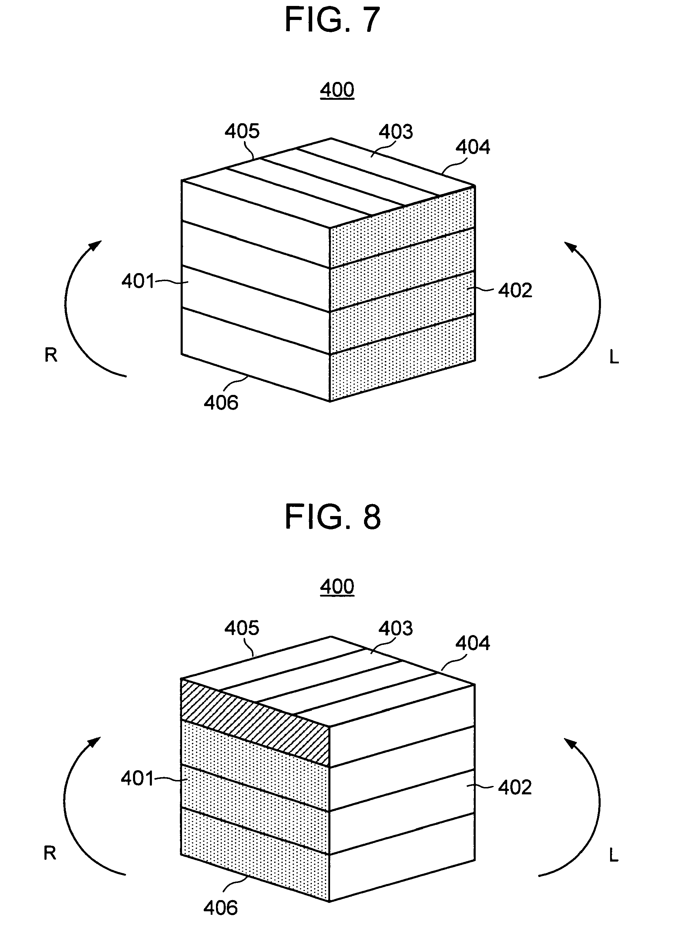

When an instruction by a depression of the power button 116 is received from the user, the user interface processor 200 generates image information for displaying the elements of the layer 1 by using the faces 401 and 403, and displaying elements of the layer 2 in the face 402, while bringing the face 401 into focus, and highlighting the top element of the layer 1 in Fig. 4. Then, the user processor 200 sends the generated image information to the display unit 300. Fig. 7 shows the state of the cube 400 in this case.

When an instruction by a depression of the R button 112 is received from the user through the control unit 100, the user interface processor 200 brings the face on the right of the currently-focused face into focus, and makes the face 403 display elements that are of the same layer as that of the elements in the focus face and can not be displayed in the focus face. Fig. 8 shows the state of the cube 400 in this case. At this time, in the case where the right face (the face 402) is the focus face, then the right face is kept in focus as before, and the left face (the face 401) is made to display the elements that were displayed in the right face before the instruction, and the right face is made to display elements one layer under the element highlighted in the right face before the instruction.

When an instruction by a depression of the L button 111 is received from the user through the control unit 100, the user interface processor 200 brings the face on the left of the currently-focused face into focus, and makes the display contents of the face 403 display elements that are of the same layer as that of the elements in the focus face and can not be displayed in the focus face. At this time, in the case where the left face (the face 401) is the current focus face, then the left face is kept in focus as before, and the right face (the face 402) is made to display the elements that were displayed in the left face before the instruction, and the left face is made to display elements one layer upper the elements that were displayed in the left face before the instruction.

For example, when an instruction by a depression of the R button 112 (i.e. an instruction to bring the face adjacent to the right into focus) is received from the user through the control unit 100 in a state that the face 401 is in focus as is the case just after the above-described activation, then the user interface processor 200 generates image information for making the faces 403 and 402 display the child group of the element that has been highlighted in the face 401 and making the face 401 display as many as elements that can be displayed. At this time, the image information does not perform indication focused of the face 401 itself, but highlights the element that was highlighted in the face 401, in order to distinguish the element from the other elements, and further highlights one element among the child group displayed by using the faces 403 and 402. Here, it is assumed that the element written in the top of the face 402 is highlighted. Fig. 8 shows the state of the cube 400 in this case.

When an instruction by a depression of the R button 112 (i.e. an instruction to shift the focus face to the right) is received from the user in a state that the face 402 is in focus, the user interface processor 200 generates image information for changing the layer of elements displayed in each face. Here, the user interface processor 200 generates image information for making the face 401 display as many as elements that can be displayed in the face 401 among the elements of the layer displayed in the face 402 and making the faces 402 and 403 display the elements of the child group of the element that was highlighted in the face 402 (or the face 403) before receiving the instruction. At this time, the image information does not perform indication focused of the face 401 itself, but, in the face 401, highlights the element that was highlighted in the face 402 (or the face 403) before the change, in order to distinguish the element from the other elements, and further highlights one element of the child group displayed in the faces 402 and 403. Here, it is assumed that the element written in the top of the face 402 is highlighted.

By generating such image information and displaying it on the display screen, it looks to the user like the cube has been turned to the left (i.e. clockwise seen from the face 403) and the focus face has been shifted to the right, as shown in Figs. 7 and 8.

Of course, if elements displayed in the face 402 before receiving the instruction are elements in the lowest layer of the selectable items (elements), the user interface processor 200 does not generate new image information. Accordingly, in this case, the display contents of the display unit 300 do not change.

When an instruction by a depression of the L button 111 (i.e. an instruction to shift the focus face to the left) is received from the user in a state that the face 401 is in focus, the user interface processor 200 generates image information for changing the layer of elements displayed in each face. Here, the user interface processor 200 generates image information for making the face 402 display elements of the layer displayed in the face 401, and making the face 401 display a group of elements that have the same parent and include the parent element to the elements that were displayed in the face 401 before receiving the instruction. As shown in Figs. 7 and 8, it looks to the user like the cube has been turned to the right (i.e. counterclockwise seen from the face 403) and the focus face has been shifted to the left.

In this case too, if elements displayed in the face 401 before receiving the instruction are elements in the lowest layer of the selectable items (elements), the user interface processor 200 does not generate new image information. Accordingly, in this case too, the display contents of the display unit 300 do not change.

When an instruction by a depression of the L button 111 is received from the user through the control unit 100 in a state that the face 402 is in focus, the user interface processor 200 generates image information for bringing the face 401 into focus, making the faces 401 and 403 display elements that have the same parent as the elements that were displayed in the face 401 before receiving the instruction, and making the face 402 display as many as elements that can be displayed among the elements that were displayed before receiving the instruction.

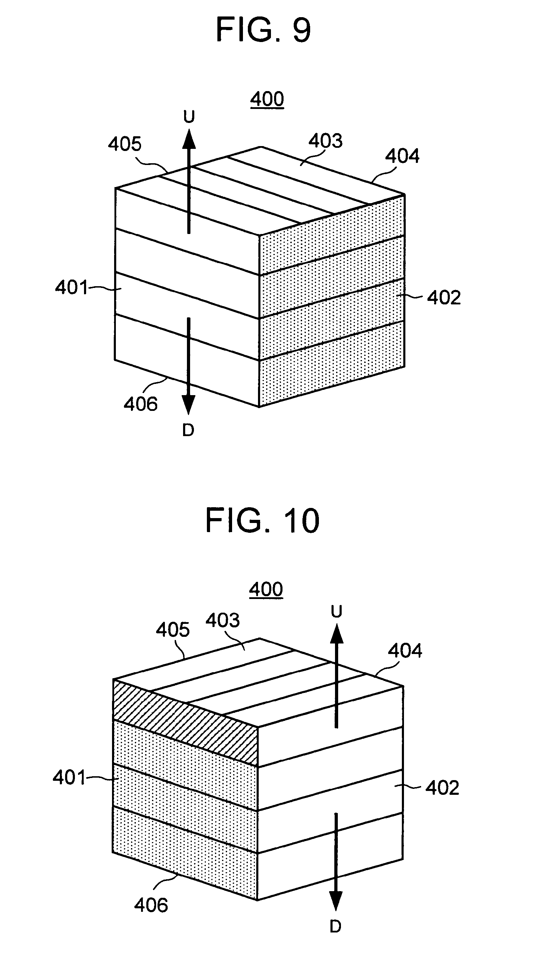

Further, when an instruction by a depression of the D button 114 is received from the user through the control unit 100 in a state that a specific element is highlighted in an focused face, the user interface processor 200 generates image information in which the element just below the highlighted element in Fig. 4 becomes a new highlighted object while the displayed elements and the focus face are kept unchanged. Further, when an instruction by a depression of the U button 113 is received, the user interface processor 200 generates image information in which the element just above the highlighted element in Fig. 4 becomes a new highlighted object while the displayed elements and the focus face are kept unchanged. Figs. 9 and 10 show states of the cube 400 in such cases.

Here an instruction for highlighting edge(Top/Bottom) of the element. When depression of the D button 114 event is received in a state that the bottom element in a face is highlighted among the displayed items, or when depression of the U button 113 event is received in a state that the top element in a face is highlighted among the displayed items, displaying information will not change.

### (Because highlighting at the limit of selectable area)

Further, when an instruction by a depression of the D button 114 (i.e. an instruction to highlight the element just below the currently-highlighted element) is received from the user through the control unit 100 in a state that the bottom element is highlighted among the elements displayed in the focus face, the user interface processor 200 generates image information for: displaying, in the bottom position of the focused face (i.e. the most distant position from the face 403), an element that belongs to the same child group to which the elements displayed in the current focus face belong and was not displayed in the focused face and the face 403; shifting the display positions of the other elements one by one upward (i.e. toward the face 403); displaying, in the bottom position of the face 403 (i.e. the closest position to the face 403), the element that was displayed in the top position of the focus face (i.e. the closest position to the face 403); and shifting the display positions of the other elements one by one upward (i.e. to the direction of becoming more distant from the focus face), so that the element that was displayed in the top position (i.e. the most distant position from the focus face) is not displayed any longer. It looks to the user like the elements are scrolled up.

In this case too, if all the elements to display are displayed in the focus face and the face 403 before receiving the instruction, the user interface processor 200 does not generate new image information. Accordingly, in this case, the display contents of the display unit 300 do not change.

Further, when an instruction by a depression of the U button 113 (i.e. an instruction to highlight the element just above the currently-highlighted element) is received from the user through the control unit 100 in a state that the top element (i.e. the element in the most distant position from the focus face) is highlighted among the elements displayed in the focus face, the user interface processor 200 generates image information for: displaying, in the top position of the face 403 (i.e. the most distant position from the focus face), an element that belongs to the same child group to which the elements displayed in the current focus face belong and was not displayed in the focus face and the face 403; shifting the display positions of the other elements one by one downward (i.e. toward the focus face); displaying, in the top position of the focused face (i.e. the closest position to the face 403), the element that was displayed in the bottom position of the face 403 (i.e. the closest position to the focus face); and shifting the display positions of the other elements one by one downward (i.e. to the direction of becoming more distant from the face 403), so that the element that was displayed in the bottom position of the focus face (i.e. the most distant position from the face 403) is not displayed any longer. It looks to the user like the elements are scrolled down.

In this case too, if all the elements to display are displayed in the focus face and the face 403 before receiving the instruction, the user interface processor 200 does not generate new image information. Accordingly, in this case, the display contents of the display unit 300 do not change.

Next, a state of the cube 400 displayed on the display unit 300 that has received image information generated by the user interface processor 200 will be described by taking an example. Here, it is assumed that each face of the cube 400 can display four elements. Further, it is assumed that the selectable items (elements) are those shown in Fig. 4.

When the user interface processor 200 receives a command indicating power on from the control unit 100, the user interface processor 200 is activated. The user interface processor 200 sends image information to the display unit 300, for arranging and displaying in the face 401 the elements 1 and 2 as elements in the layer 1, and arranging and displaying in the face 402 the elements 1-1, 1-2 and 1-3 as the child group (in the layer 2) of the element 1. In the image information sent at this time, the face 401 is in focus, the element 1 is highlighted, and the face 403 displays no element.

Next, when a command indicating a depression of the R button 112 is received, the user interface processor 200 generates image information in which the face 402 is brought into focus, and the element (the element 1-1, in this example) displayed at the top position in the face 402 (i.e. the closest position to the face 403) is highlighted. The user interface processor 200 sends the image information to the display unit 300. Here, if the face 402 alone can not display all the elements of the layer 2 and the face 403 also should be used to display the elements of the child group, then the user interface processor 200 generates image information in which the element displayed in the top position (i.e. the most distant position from the face 402) among the elements displayed in the face 403 is highlighted.

Next, when a command indicating a depression of the D button 114 is received, the user interface processor 200 generates image information for highlighting the element 1-2.

Next, when a command indicating a depression of the R button 112, the user interface processor 200 generates image information in which the face 401 display the elements 1-1, 1-2 and 1-3, the face 402 displays four elements 1-2-3, 1-2-4, 1-2-5 and 1-2-6 from the child group of the element 1-2, the face 403 displays the remaining elements 1-2-1 and 1-2-3, the face 402 is in focus, and the element 1-2-1 in the face 403 is highlighted.

Next, when a command indicating a depression of the L button 111 is received, the user interface processor 200 generates image information in which the displayed elements are kept unchanged, the face 401 is focused, and the element 1-1 in the face 401 is highlighted. Here, the previous image information (the image information where the element 1-2 in the face 401 is highlighted), which has been recorded, may be sent to the display unit 300.

Further, when a command indicating a depression of the L button 111 is received, the user interface processor 200 generates image information in which the face 401 displays the elements 1 and 2, the face 402 displays the elements 1-1, 1-2 and 1-3, i.e. the child group of the element 1, the face 401 is in focus, and the element 1 is highlighted.

As described above, in the present embodiment, the face 401 as one side face of the cube 400 is assigned for the elements in the top layer, and adjacent side faces 402, 404 and 405 are each successively assigned for elements (submenu) that are one layer under the elements assigned to the preceding face in the counterclockwise order. Further, the faces 403 and 406 as the top and bottom face of the cube 400 are assigned for elements that can not be displayed in an in-focus side face, and such elements are displayed depending on operation of selecting an element displayed in a side face. Two side faces displayed on the display screen can be changed depending on operation of the control unit 100.

Thus, the user can see all the elements from the elements in the top layer displayed in the face 401 down to the elements in the bottom layer displayed in the face 405 by simple operation. In other words, a plurality of selectable items of many layers can be displayed at the same time on the display screen. As a result, it is possible to use the limited screen display area effectively, and the user can recognize the hierarchical structure of the selectable items sensuously and naturally. Thus, the present embodiment can provide an efficient and friendly user interface.

In the above embodiment, three faces of the cube 400 are displayed. However, the six faces constituting the cube may be displayed on the display screen. In the following, an example of such case will be described.

When the face 401 is in focus, the faces 403 and 406 display elements of the child group in the same layer (all the elements in the case of the top layer). That is to say, elements of a child group are displayed in an image by using the faces 401, 403 and 406. Further, a child group of the highlighted element in the face 401 is arranged in the face 402, a child group of the top element among the elements arranged in the face 402 in the face 404, and a child group of the top element among the elements arranged in the face 404 in the face 405.

When the face 402 is in focus, elements of a child group of a specific element in the face 401 are arranged in the faces 402, 403 and 406. Further, the child group of the element highlighted and displayed in the face 402 is arranged in the face 404. When the top element among the elements of the child group displayed in the face 402 has a child group, elements of that child group are arranged in the face 405.

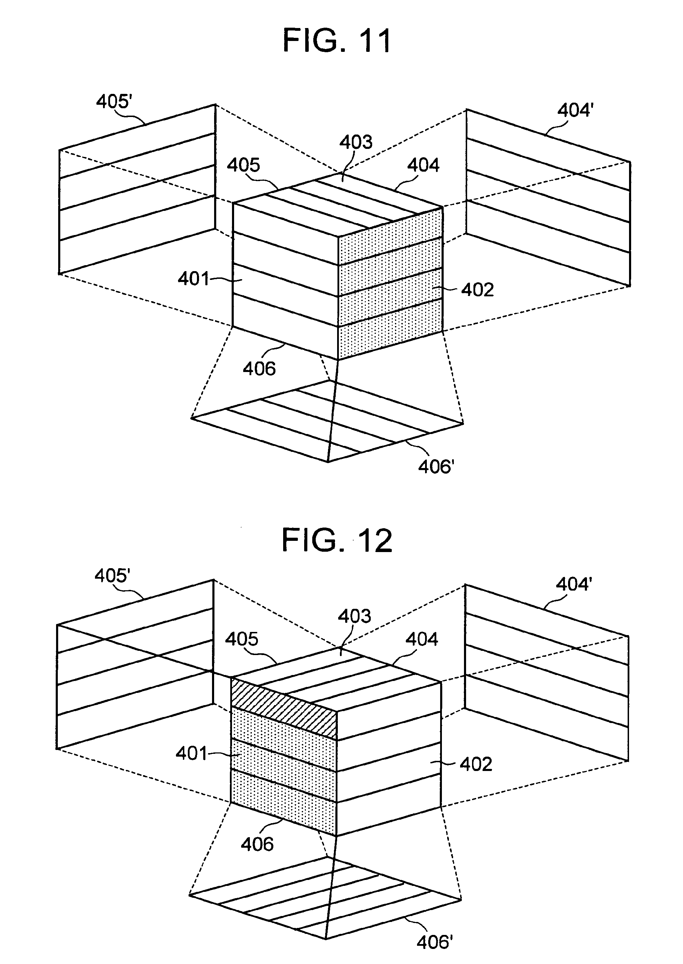

In the following, a method of displaying contents arranged in the faces 404, 405 and 406 will be described. Figs. 11 and 12 are conceptual diagrams showing the case where elements arranged in those three faces are displayed.

As shown in the figure, the user interface processor 200 of the present embodiment generates image information in which elements arranged in the faces 404, 405 and 406 are projected onto respective virtual walls 404', 405' and 406' by light radiated from a virtual light source positioned at the center of the cube 400.

Further, in the case where there is no item to be displayed in the face 404, 405 or 406 depending on the number of layers and the number of elements of the selectable items, then image information for projecting elements arranged in the face in question onto the virtual wall is not generated.

As for the above case where the six faces are displayed, elements displayed by the display unit 300 on the display screen on the basis of image information generated by the user interface processor 200 among the selectable items having hierarchical structure shown in Fig. 4 will be described. Here also, it is assumed that each face of the cube 400 can display four elements.

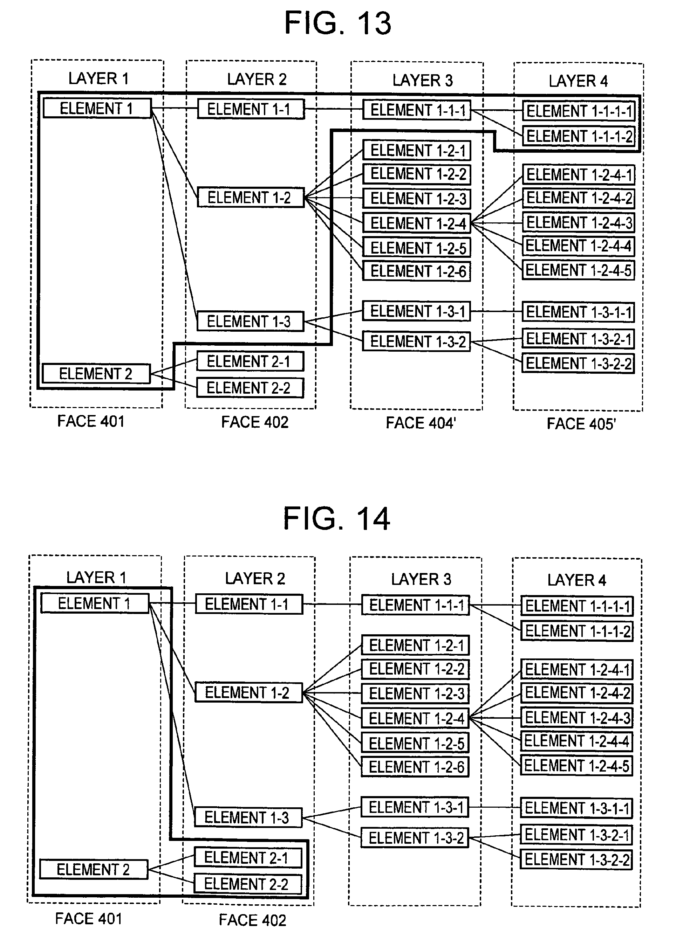

Fig. 13 is a diagram showing elements displayed on the display screen in the case where the face 401 is in focus and the element 1 displayed in the face 401 is highlighted. In this case, the face 402 displays the child group of the element 1, i.e. the elements 1-1, 1-2 and 1-3; the face 404 or the virtual wall 404' displays the child group of the element 1-1, i.e. the element 1-1-1; and the face 405 or the virtual wall 405' displays the child group of the element 1-1-1, i.e. the elements 1-1-1-1 and 1-1-1-2.

Fig. 14 is a diagram showing elements displayed on the display screen in the case where the face 401 is in focus and the element 2 displayed in the face 401 is highlighted. In this case, the face 402 displays the child group of the element 2, i.e. the elements 2-1 and 2-2, and the other faces display nothing.

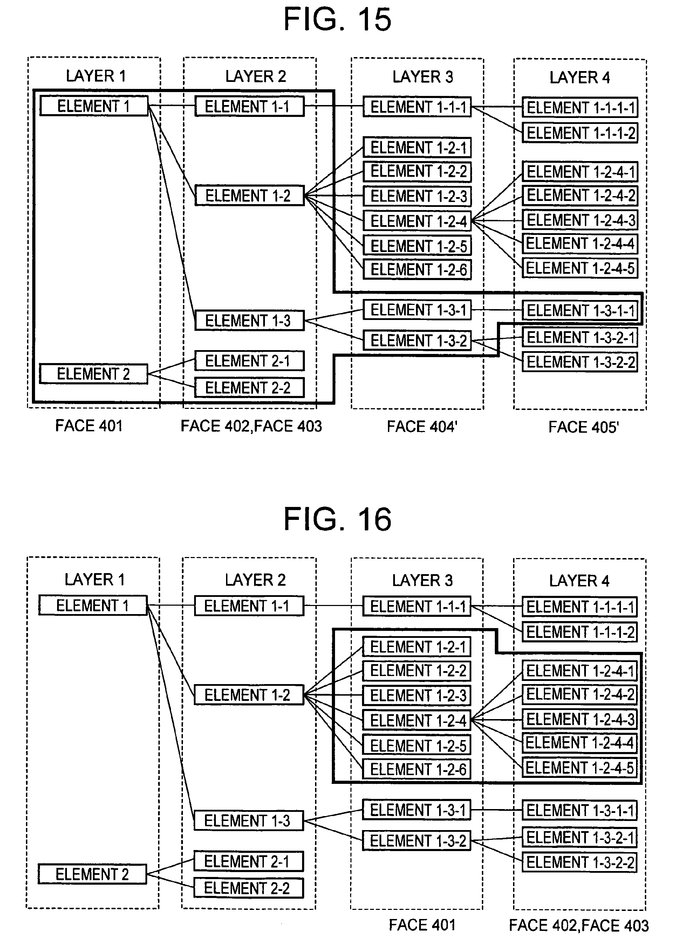

Fig. 15 is a diagram showing elements displayed on the display screen in the case where the face 402 is in focus and the element 1-3 displayed in the face 402 is highlighted. In this case, the face 401 displays the elements of the layer 1, i.e. the elements 1 and 2. The faces 403, 402 and 406 are used to display the child group in the layer 2. Here, the face 402 displays the elements 2-2, 2-1, 1-3 and 1-2; and the face 403 the element 1-1. Here, the number of elements is five, and the face 406 or the virtual wall 406' displays nothing. Further, the face 404 or the virtual wall 404' displays the child group of the element 1-3, i.e. the elements 1-3-1 and 1-3-2; and the face 405 or the virtual wall 405' the element 1-3-1-1.

Fig. 16 is a diagram showing elements displayed on the display screen in the case where the face 402 is in focus and the element 1-2-4-1 in the face 403 is highlighted. The faces 403, 402 and 406 are used to display elements of the layer 4. Here, there are five elements belonging to the child group concerned, and thus the face 402 displays the elements 1-2-4-5, 1-2-4-4, 1-2-4-3 and 1-2-4-2, and the face 403 the element 1-2-4-1. The face 406 or the virtual wall 406' displays nothing. The face 401 displays the child group (in the layer 3) that includes the parent element to the elements displayed in the layer 4. Here, the face 401 displays the elements 1-2-1, 1-2-2, 1-2-3 and 1-2-4.

Thus, selectable items are displayed dynamically by projecting the back faces of the cube 400 onto the virtual walls. As a result, many selectable items can be displayed without requiring the user to perform operation of turning the cube 400, and the limited screen display area can be used efficiently.

In the above embodiments, a side face is assigned for elements in a lower layer, as the side face is positioned later in the counterclockwise order from the side face displaying the elements in the top layer. However, a side face may be assigned for element in a lower layer, as the side face is positioned later in the clockwise order.

Further, in the above embodiments, the top face is displayed. And, if there are elements that can not be displayed in a side face, such elements are displayed continuously from the side face to the top face. However, it is possible that the bottom face is used instead of the top face, and elements are displayed continuously from a side face to the bottom face so that an element can be selected from those elements.

Further, in the above embodiments, the number of elements that can be displayed in each face is constant (for example, four). However, it is possible that the number is changed depending on the number of elements to be displayed, and each face may display a different number of elements.

Further, in the above embodiments, a perspective view of the cube is displayed to have either the top face or the bottom face and two side faces favorably having the same area. However, the display mode is not limited to this, and the focus face may be displayed to be larger than the other faces. Or, if the top or the bottom face has no element to display, that face may not be displayed.

Further, in the above embodiments, the cube having four side faces is used so that four layers can be displayed. If elements to display have more than four layers, one or both of the face 401 displaying the top layer and the face 405 displaying the bottom layer may display a message to the effect that there is another layer furthermore, and the non-display layer in question may be displayed when a user further operates the R or L button. In that case, among the layers assigned to the four side faces, the assignment to the face of the most distant layer from the newly-displayed layer is cancelled.

Further, the above embodiments have been described taking the example where the cube is used. However, the three-dimensional figure used for display is not limited to this, and a cube having top and bottom faces and a polygonal section may be used. In this case, it is possible to increase faces that can be displayed on the display screen in order to display more layers at once. Here, it is possible to determine the number of angles (the number of face sides) of the cube on the basis of the number of layers of elements to display.

In the above embodiments, the description has been given taking the example of an AV appliance. However, the present invention can be applied to all electronic appliances having a user interface.

The detailed description in the above shows only examples of the present invention. And, a person skilled in the art will easily understand that many modifications can be introduced to the example embodiments without departing largely from the new disclosure and advantages of the present invention. Thus, it is intended that all of such modifications are included in the scope of the present invention.

The contents of Japanese Patent Application 2006-059342 (filed on March 6, 2006) including its detailed description, claims, figures and abstract are hereby incorporated by reference into this application.

### Industrial Applicability

The present invention can be very useful for any electronic appliance having a user interface that provides selectable items to a user.

## Claims

1. A user interface processor for generating a display screen that provides selectable items having a multi-layered hierarchical structure to a user, comprising:
an image information generation part, which generates two-dimensional image information including at least two side faces of a cube that has side faces to which, out of the selectable items, selectable items of respective different layers are assigned.

2. A user interface processor of Claim 1, wherein:
the image information generation part assigns structurally-continuous layers of selectable items to respective adjacent side faces of the cube.

3. A user interface processor of Claim 1, wherein:
when the user selects a selectable item assigned to one side face, the image information generation part assigns to an adjacent side face, selectable items belonging to a layer just under a layer to which the selected selectable item belongs.

4. A user interface processor of Claim 1, wherein:
the side faces of the cube display a given number of selectable items in a same layer; and
when a number of selectable items to display in the side faces exceeds the given number, the image information generation part assigns the selectable items in question to a top face and/or a bottom face of the cube in addition to the side faces of the cube.

5. A user interface processor of one of Claims 1 - 4, wherein:
the two-dimensional image includes, in addition to the at least two side faces of the cube, other faces projected onto virtual walls.

6. A user interface processing method for generating a display screen that provides selectable items having a multi-layer hierarchical structure to a user, wherein:
the method generates two-dimensional image information including at least two side faces of a cube that has side faces to which, out of the selectable items, selectable items of respective different layers are assigned.

7. A user interface processing method of Claim 6, wherein:
structurally-continuous layers of selectable items are assigned to respective adjacent side faces of the cube.

8. A user interface processing method of Claim 6, wherein:
when the user selects a selectable item assigned to one side face, selectable items belonging to a layer just under a layer to which the selected selectable item belongs are assigned to an adjacent side face.

9. A user interface processing method of Claim 6, wherein:
the side faces of the cube display a given number of selectable items in a same layer; and
when a number of selectable items to display in the side faces exceeds the given number, the selectable items in question are assigned to a top face and/or a bottom face of the cube in addition to the side faces of the cube.

10. A user interface processing method of one of Claims 6 - 9, wherein:
the two-dimensional image includes, in addition to the at least two side faces of the cube, other faces projected onto virtual walls.
